Europäisches Patentamt

(19) European Patent Office

Office européen des brevets

(11) Veröffentlichungsnummer: **0 101 914**
**B1**

(12) # EUROPÄISCHE PATENTSCHRIFT

(45) Veröffentlichungstag der Patentschrift:
**07.01.87**

(51) Int. Cl.⁴: **G 01 N 35/00** // G01N27/90

(21) Anmeldenummer: **83107255.8**

(22) Anmeldetag: **23.07.83**

(54) **Verfahren und Vorrichtung zum Abtasten der Oberfläche eines Teiles.**

(30) Priorität: **14.08.82 DE 3230368**

(43) Veröffentlichungstag der Anmeldung:
**07.03.84 Patentblatt 84/10**

(45) Bekanntmachung des Hinweises auf die Patenterteilung:
**07.01.87 Patentblatt 87/2**

(84) Benannte Vertragsstaaten:
**FR GB IT SE**

(56) Entgegenhaltungen:
**EP - A - 0 029 070**
**GB - A - 1 385 184**
**US - A - 3 553 570**

(73) Patentinhaber: **Institut Dr. Friedrich Förster Prüfgerätebau GmbH & Co. KG, Postfach 925 In Laisen 70, D-7410 Reutlingen 1 (DE)**

(72) Erfinder: **Stumm, Wolfgang, Dr., Gumpperweg 14, D-7410 Reutlingen 1 (DE)**

### Beschreibung

Die vorliegende Erfindung betrifft ein Verfahren zum Abtasten der Oberfläche eines Teiles durch einen Tastkopf, bei dem sich der letztere und das Teil relativ zueinander in einer ersten Richtung mit einer Geschwindigkeit $V_t$ fortbewegen und bei dem eine lineare oszillierende Bewegung des Tastkopfes stattfindet, die eine Komponente senkrecht zur ersten Richtung mit einer im wesentlichen gleichförmigen Geschwindigkeit $\pm V_a$ besitzt. Die Erfindung betrifft ferner eine Vorrichtung zum Durchführen dieses Verfahrens gemäss dem Oberbegriff des Anspruchs 4.

Zweck eines solchen Verfahrens kann es u.a. sein, die Oberfläche eines Halbzeuges, etwa einer Bramme, mit Mitteln der zerstörungsfreien Werkstoffprüfung, wie z.B. Wirbelstromtastsonden, vollständig auf Fehler abzutasten und deren Lage und Grösse festzustellen. Bei weitgehend sinusförmigen Bewegungen ergeben sich dabei auch etwa sinusförmige Abtastbahnen (siehe z.B. DE-A-1 773 501). Der Einsatz von Filtern zur Störunterdrückung bei der Signalaufbereitung führte dazu, dass eine gleichförmige Geschwindigkeit der Hin- und Herbewegung angestrebt und innerhalb gewisser Grenzen auch erreicht wurde (siehe z.B. DE-A-2 745 159). Die dabei sich einstellenden Abtastbahnen zeigen einen trapezförmigen Verlauf. Gelingt es die Zeit der Bewegungsumsteuerung vernachlässigbar klein gegenüber der Zeit einer Abtastperiode zu halten, kann man auch zu einem annähernd dreieckförmigen Verlauf kommen. Eine derartige Abtastung befriedigt alle Anforderungen, wenn bei gegebenen ausreichend grosser Abtastgeschwindigkeit der kleinste noch nachzuweisende Fehler mehrfach vom Tastkopf überlaufen wird. Soll jedoch bei einer begrenzten Abtastgeschwindigkeit in möglichst kurzer Zeit ein Fehler, der in Transportrichtung eine bestimmte Länge aufweist, noch mit Sicherheit entdeckt werden, so müssen die Abtastlinien von Vor- und Rücklauf parallel zueinander verlaufen, und zwar mit einem gegenseitigen Abstand, der geringer ist als die Länge des Fehlers. Der Wunsch nach parallelen Abtastlinien kann sich auch ergeben, wenn bei einer dreieckförmigen Abtastbahn nicht punktförmig, sondern mit einer gewissen Breite abgetastet wird und wenn kein Bereich der Oberfläche doppelt abgetastet werden soll.

Die Erfindung stellt sich zur Aufgabe, bei einem Verfahren und einer Vorrichtung der o.g. Art die Abtastlinien der Hin- und Herbewegung parallel zu machen. Die Aufgabe wird gelöst durch ein Verfahren, das gemäss Anspruch 1 und durch eine Vorrichtung, die gemäss Anspruch 4 gekennzeichnet ist.

Die Lösung der erfindungsgemässen Aufgabe gewährleistet auf einfache Weise und mit relativ einfachen Mitteln, dass die Abtastlinien der Hin- und Herbewegung parallel zueinander verlaufen und dass so ihr Abstand stets gleich bleibt. Zwar hat man bei dreieckförmiger Abtastbahn ohnehin parallele Abtastlinien, wenn auf die Ausnützung des Rücklaufs verzichtet wird. Demgegenüber bringt jedoch die erfindungsgemässe Lösung einen erheblichen Zeitgewinn: für vollständige Abtastung wird nur noch die halbe Zeit benötigt, da Vor- und Rücklauf der Abtastbewegung ausgenutzt werden können.

Nach einer vorteilhaften Ausgestaltung der Erfindung wird für den Fall schwankender Transportgeschwindigkeit $V_t$ die Geschwindigkeit $V_a$ der Hin- und Herbewegung durch $V_t$ so gesteuert, dass

$$\frac{V_t}{V_a} = \mathrm{tg}\,\alpha = \mathrm{const.}$$

bleibt. Für den gleichen Fall kann aber auch nach einer anderen Ausgestaltung der Erfindung der Winkel $\alpha$ durch $V_t$ so gesteuert werden, dass die Parallelität der Abtastlinien erhalten bleibt. Weitere Ausgestaltungen der Erfindung ergeben sich aus den weiteren Unteransprüchen.

Im folgenden wird die Erfindung an Hand von Figuren und durch ein Ausführungsbeispiel näher erläutert. Es zeigen im einzelnen:

Fig. 1a und 1b Abtastbahnen bekannter Systeme

Fig. 2 eine erfindungsgemässe Vorrichtung in Vorderansicht

Fig. 3 die gleiche Vorrichtung in Draufsicht

Fig. 4 ein Schaltschema der Vorrichtung

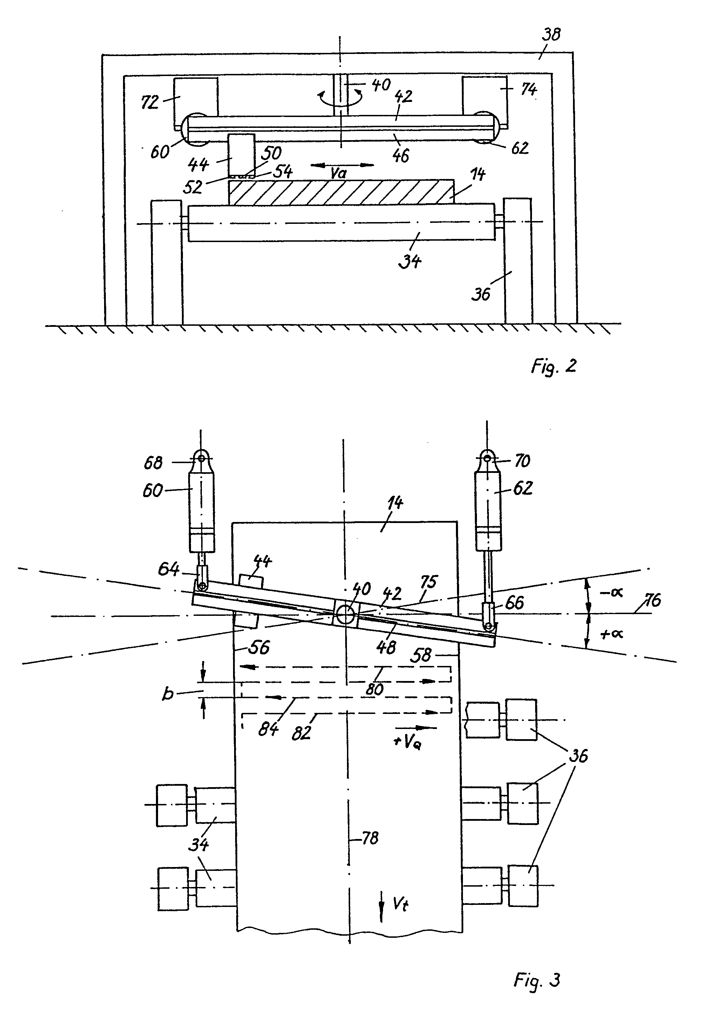

Figur 1a zeigt den Verlauf der Abtastbahn 10 einer praktisch punktförmigen Sonde 12 auf einer Bramme 14. Die Abtastbahn 10 ergibt sich dadurch, dass die Bramme 14 mit der Geschwindigkeit $V_t$ in Richtung von Pfeil 16 voranbewegt wird, während sich die Sonde 12 mit der Geschwindigkeit $\pm V_a$ zwischen zwei Endpunkten hin- und herbewegt. Die Umsteuerung der Bewegung der Sonde 12 von $+V_a$ auf $-V_a$ an den Endpunkten soll in vernachlässigbar kurzer Zeit erfolgen. Ein Fehler 18, dessen Länge den Abstand b der Abtastlinien 20 und 22 geringfügig übertrifft, wird erst dann sicher zur Anzeige gebracht, wenn die Sonde 12 einen vollen Abtastzyklus mit Vor- und Rücklauf durchgeführt hat. Die Zeit T für einen Durchlauf beträgt $T = B \cdot V_a = b \cdot V_t$, wobei B die Breite der Bramme ist.

In Figur 1b ist die Sonde 12 durch eine mehrere Einzelsonden 24 aufweisende Sondenanordnung 26 ersetzt, deren Ausdehnung in Längsrichtung etwa dem Abstand b der beiden Abtastlinien 28 und 30 entspricht und die in der Lage ist, alle von der Längsausdehnung der Sondenanordnung 26 überlaufenen Fehler zu erfassen. Es zeigt sich dabei, dass bei jedem Durchlauf der Sondenanordnung 26 ein Zwickel 32 abgetastet wird, der bereits beim vorhergehenden Durchlauf abgetastet worden war und dass so die ganze Fläche doppelt abgetastet wird. Abgesehen davon, dass eine solche Doppelabtastung an sich schon unerwünscht sein kann, etwa wenn es sich statt der Abtastung auf Fehler um einen Bearbeitungsvorgang handelt, ist in jedem Fall der mit ihr verbundene Zeitverlust unerwünscht. In der Zeit 2T eines Abtastzyklus kann die doppelte Fläche abgetastet werden, wenn es gelingt, die Abtastbahnen von Vor- und Rücklauf parallel verlaufen zu lassen.

Die Figuren 2 und 3 zeigen in vereinfachter Darstellung die Vorderansicht und die Draufsicht einer Vorrichtung, in der die Parallelführung des Vor- und Rücklaufs von Abtastbahnen verwirklicht ist. Die Bramme 14 ruht auf Rollen 34 eines Rollganges 36 und wird von diesem mit der Geschwindigkeit $V_t$ unter der Traverse 38 hindurchgeführt. In der Mitte des Rollganges 36 ist durch eine Achse 40 an der Traverse 38 ein Tragarm 42 drehgelagert. Ein Abtastkopf 44 ruht in einer am Tragarm 42 angebrachten Führungsschiene 46, die dem Abtastkopf Bewegungen entlang einer Linie 48 erlaubt. Der Abtastkopf 44 besitzt ein Antriebssystem mit einem Antriebsmotor, das der Einfachheit halber nicht dargestellt ist und das dazu dient, den Abtastkopf zu den Bewegungen in beiden Richtungen entlang der Linie 48 mit einer Geschwindigkeit $\pm V_a$ anzutreiben. Statt dessen kann aber auch ein Antriebssystem am Tragarm 42 vorgesehen sein, das den Abtastkopf 44 zur Bewegung mit der Geschwindigkeit $\pm V_a$ befähigt. Der Abtastkopf 44 enthält als Abtastorgan im vorliegenden Beispiel eine Wirbelstromtastsonde 50, die schleifend oder berührungsfrei im Eingriff mit der Oberfläche der Bramme 14 steht, um diese vollständig abzutasten. In den Abtastkopf sind ausserdem zwei Werkstoffsensoren 52, 54 eingebaut, die ein elektrisches Signal abgeben, wenn sie den Rand 56 bzw. 58 der Bramme 14 erreichen. Zwei Hydraulikzylinder 60, 62 greifen mit ihren Gabelköpfen 64, 66 an den Enden des Tragarmes 42 an. Rückwärtig sind sie durch Ösen 68, 70 an Stützen 72, 74 gelagert, die an der Traverse 38 befestigt sind. Bei den Hydraulikzylindern kann es sich um Hub-Druck-Zylinder handeln. Sind diese, wie im vorliegenden Beispiel auf der in Transportrichtung gleichen Seite angebracht, so werden sie wechselweise in Hub- bzw. Druckrichtung betätigt. Ebenso könnte natürlich auch einer der beiden Zylinder auf der in Transportrichtung entgegengesetzten Seite angebracht sein. In diesem Falle wären beide Zylinder jeweils gleichzeitig in Hub- bzw. Druckrichtung zu betätigen. Aufgabe der beiden Zylinder 60, 62 ist die schnelle Umstellung des Tragarmes 42 und damit der Laufbahn 48 des Tastkopfes 44 auf den Winkel $-\alpha$ und wieder zurück auf den Winkel $+\alpha$ gegenüber der Senkrechten 76 auf die Transportrichtung entlang Linie 78. Um den Betrag des Winkels $\alpha$ ändern zu können, ist der Weg der Hydraulikzylinder 60, 62 und die Lage der Ösen 68, 70 einstellbar. Die mäanderförmige Abtastbahn 80 ergibt sich folgendermassen: Während des Transportes der Bramme 14 mit der Geschwindigkeit $V_t$ bewegt sich der Abtastkopf 44, geführt von der auf den Winkel $+\alpha$ eingestellten Führungsschiene 46, entlang der Linie 48 mit der Geschwindigkeit $+V_a$ von links nach rechts. Daraus resultiert, wenn die Bedingung

$$\operatorname{tg} \alpha = \frac{V_t}{V_a}$$

eingehalten wird, eine Abtastlinie auf der Bramme, die der Linie 82 entspricht. Am Ende dieser Linie 82, auf ein Signal des Sensors 54 hin, wird die Bewegung des Abtastkopfes 44 in die entgegengesetzte Richtung umgesteuert. Gleichzeitig werden die beiden Hydraulikzylinder 60, 62 betätigt und stellen mit hoher Geschwindigkeit die Führungsschiene 46 auf den Winkel $-\alpha$ um, so dass der Abtastkopf 44 jetzt entlang der Linie 75 mit der Geschwindigkeit $-V_a$ von rechts nach links bewegt wird. Dabei ergibt sich, sofern auch hier die Bedingung

$$\operatorname{tg} \alpha = \frac{V_t}{V_a}$$

eingehalten wird, auf der Bramme eine Abtastlinie 84. An deren Ende erfolgt, von Sensor 52 in Gang gesetzt, die Umsteuerung der Bewegung des Abtastkopfes 44 und durch Betätigung der Hydraulikzylinder 60, 62 die Umstellung der Führungsschiene 46. Alle Abtastlinien 82, 84 usw. verlaufen parallel zueinander und senkrecht zur Transportrichtung der Bramme 14. Auch weisen die Abtastlinien 82, 84 untereinander gleiche Abstände b auf, vorausgesetzt die Drehachse 40 befindet sich in der Mitte der Abtastbahn 80.

Die Geschwindigkeit $V_a$ kann über entsprechende Steuer- und Rechenglieder auf den für die Erfüllung der Bedingung

$$\operatorname{tg} \alpha = \frac{V_t}{V_a}$$

nötigen Wert gebracht werden. Ein Geschwindigkeitssensor erzeugt dann ein von der Geschwindigkeit $V_t$ der Bramme abhängiges Signal. Ein solches Vorgehen hat den Vorteil, dass auch bei schwankendem $V_t$ stets die Parallelität und die Äquidistanz der Abtastlinien gewahrt bleibt. Innerhalb eines begrenzten Bereiches ist es auch möglich, dass von der Geschwindigkeit $V_t$ der Winkel $\alpha$ so gesteuert wird, dass Parallelität und Äquidistanz der Abtastlinien erhalten bleiben.

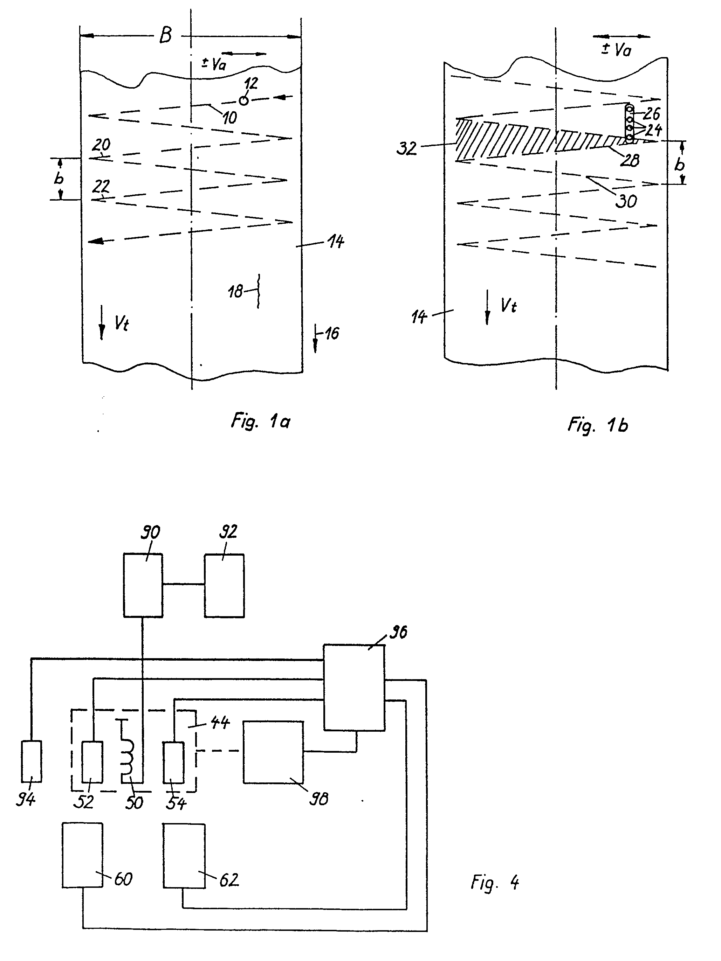

Figur 4 zeigt ein einfaches Schaltschema einer Vorrichtung zum Durchführen des erfindungsgemässen Verfahrens. Darin ist die Wirbelstromtastsonde 50 angeschlossen an ein Wirbelstromprüfgerät 90, das mit einer entsprechenden Auswerteeinrichtung 92 verbunden ist. Taster 50 ist zusammen mit den Werkstoffsensoren 52, 54 in den Tastkopf 44 eingebaut. Ein Geschwindigkeitssensor 94 erzeugt ein von der Geschwindigkeit $V_t$ der Bramme 14 abhängiges Signal. Die Ausgänge der Sensoren 52, 54, 94 sind mit Eingängen einer Steuer- und Recheneinrichtung 96 verbunden. Diese erzeugt in Abhängigkeit von den Signalen der Sensoren 52, 54, 94 Steuersignale für die beiden Hydraulikzylinder 60 und 62 und für eine Antriebseinrichtung 98 zum Antreiben der Hin- und Herbewegung des Tastkopfes 44 mit der Geschwindigkeit $\pm V_a$.

## Patentansprüche

1. Verfahren zum Abtasten der Oberfläche eines Teiles durch einen Tastkopf, bei dem sich der letztere und das Teil relativ zueinander in einer ersten Richtung mit einer Geschwindigkeit $V_t$ fortbewegen und bei dem eine lineare oszillierende Bewegung des Tastkopfes stattfindet, die eine Komponente senkrecht zur ersten Richtung mit einer im wesentlichen gleichförmigen Geschwindigkeit $\pm V_a$ besitzt, dadurch gekennzeichnet, dass die Richtung der oszillierenden Bewegung des Tastkopfes einen Winkel $\alpha$ mit der Senkrechten auf die erste Richtung bildet, und zwar einen Winkel $+\alpha$ bei der Hinbewegung und $-\alpha$ bei der Herbewegung, wobei

$$\alpha = \text{arc tg} \frac{V_t}{V_a}$$

ist.

2. Verfahren nach Anspruch 1, dadurch gekennzeichnet, dass $V_a$ von $V_t$ dergestalt gesteuert wird, dass stets

$$\frac{V_t}{V_a} = \text{tg } \alpha = \text{const.}$$

ist.

3. Verfahren nach Anspruch 1, dadurch gekennzeichnet, dass $\alpha$ von $V_t$ dergestalt gesteuert wird, dass die Parallelität und Äquidistanz der Abtastlinien erhalten bleiben.

4. Vorrichtung zur Durchführung des Verfahrens nach Anspruch 1, mit einer Transporteinrichtung (34, 36), die die relative Geschwindigkeit $V_t$ zwischen dem Teil (14) und dem Tastkopf (44) entlang einer Transportbahn (78) herstellt, mit Führungsmitteln (42, 46), von denen der Tastkopf (44) entlang einer linearen Laufbahn (48, 75) geführt wird, und mit Antriebsmitteln (98), die den Tastkopf (44) zu einer oszillierenden Bewegung zwischen zwei Endpunkten mit im wesentlichen gleichbleibender Geschwindigkeit $\pm V_a$ antreiben, dadurch gekennzeichnet, dass die Führungsmittel (42, 46) in einer zur Oberfläche des Teiles (14) im wesentlichen parallelen Ebene um einen Drehpunkt (40) drehbar gelagert sind und von Stellmitteln (60, 62) in zwei extreme Endstellungen bewegt werden können, in denen jeweils die Laufbahn (48, 75) einen Winkel $+\alpha$ bzw. $-\alpha$ mit einer Senkrechten zur Transportbahn bildet.

5. Vorrichtung nach Anspruch 4, dadurch gekennzeichnet, dass der Drehpunkt (40) sich in der Mitte zwischen den Endpunkten der oszillierenden Bewegung des Tastkopfes (44) und in der Mitte der Querausdehnung der Transportbahn (78) befindet.

6. Vorrichtung nach Anspruch 4, dadurch gekennzeichnet, dass zu den Führungsmitteln (42, 46) ein in seiner Mitte drehgelagerter Balken (42) gehört, an dem mindestens ein Hydraulikzylinder (60, 62) angreift.

## Claims

1. Method for scanning the surface of an object by means of a scanning head, wherein the latter and the object move along relative to one another in a first direction at a speed $V_t$ and wherein a linear oscillating movement of the scanning head takes place which has a component perpendicular to the first direction with a substantially uniform speed $\pm V_a$, characterised in that the direction of the oscillating movement of the scanning head forms an angle $\alpha$ with the perpendicular to the first direction, and in fact an angle $+\alpha$ on the forward movement and $-\alpha$ on the backward movement

$$\alpha \text{ being } = \text{tg} \frac{V_t}{V_a}.$$

2. Method according to claim 1, characterised in that $V_a$ is controlled in such manner by $V_t$ that

$$\frac{V_t}{V_a} \text{ is always } = \text{tg } \alpha = \text{const.}$$

3. Method according to claim 1, characterised in that $\alpha$ is controlled in such manner by $V_t$ that the parallelism and equidistance of the scanning lines are maintained.

4. Apparatus for carrying the method according to claim 1 into effect, having a conveying system (34, 36) which establishes the relative speed $V_t$ between the object (14) and the scanning head (44) along a conveying path (78), guide means (42, 46) by which the scanning head (44) is guided along a linear path of movement (48, 75), and driving means (98) which drive the scanning head (44) to perform an oscillating movement between two end points at a substantially constant speed $\pm V_a$, characterised in that the guide means (42, 46) are mounted to turn about a pivot (40) in a plane substantially parallel to the surface of the object (14) and can be moved by operating means (60, 62) into two extreme end positions in which at any given time the path of movement (48, 75) forms an angle $\pm\alpha$ or $-\alpha$, respectively, with a perpendicular to the conveying path.

5. Apparatus according to claim 4, characterised in that the pivot (40) is located in the centre between the end points of the oscillating movement of the scanning head (44) and in the centre of the transverse extent of the conveying path (78).

6. Apparatus according to claim 4, characterised in that the guide means (42, 46) include a beam (42) pivotally mounted at its centre and on which at least one hydraulic cylinder (60, 62) acts.

## Revendications

1. Procédé pour le balayage de la surface d'un objet par une tête balayeuse, dans lequel cette dernière et l'objet se meuvent relativement l'un par rapport à l'autre dans une première direction avec une vitesse $V_t$ et dans lequel il se produit un mouvement oscillant linéaire de la tête balayeuse qui présente une composante perpendiculaire à la première direction avec une vitesse pratique-

ment uniforme ± $V_a$, caractérisé en ce que la direction du mouvement oscillant de la tête balayeuse fait un angle $\alpha$ avec la perpendiculaire à la première direction et plus précisément un angle $+\alpha$ lors du mouvement d'aller et $-\alpha$ lors du mouvement de retour, étant égal à arc

$$\operatorname{tg} \frac{V_t}{V_a} \; .$$

2. Procédé selon la revendication 1, caractérisé en ce que $V_a$ est commandé par $V_t$ de telle sorte que l'on a toujours

$$\frac{V_t}{V_a} = \operatorname{tg} \alpha = \text{constante.}$$

3. Procédé selon la revendication 1, caractérisé en ce que $\alpha$ est commandé par $V_t$ de telle sorte que le parallélisme et l'équidistance des lignes de balayage se maintiennent.

4. Dispositif pour la mise en œuvre du procédé selon la revendication 1, muni d'un transporteur (34, 36) qui établit la vitesse relative $V_t$ entre l'objet (14) et la tête balayeuse (44) le long d'une voie de transport (78), de moyens de guidage (42, 46) par lesquels la tête balayeuse (44) est guidée le long d'une trajectoire linéaire (48, 75) et de moyens d'entraînement (98) qui entraînent la tête balayeuse (44) en un mouvement oscillant entre deux points extrêmes à une vitesse pratiquement constante ± $V_a$, caractérisé en ce que les moyens de guidage (42, 46) sont montés de manière à pouvoir tourner, dans un plan pratiquement parallèle à la surface de l'objet (14), autour d'un centre de rotation (40) et peuvent être amenés par des moyens de manœuvre (60, 62) à deux positions extrêmes dans chacune desquelles la trajectoire (48, 75) fait un angle respectif $+\alpha$, $-\alpha$ avec une perpendiculaire à la voie de transport.

5. Dispositif selon la revendication 4, caractérisé en ce que le centre de rotation (40) se trouve à mi-chemin entre les points extrêmes du mouvement oscillant de la tête balayeuse (44) et au milieu de l'extension transversale de la voie de transport (78).

6. Dispositif selon la revendication 4, caractérisé en ce que les moyens de guidage (42, 46) comprennent une poutre (42) montée en son centre de manière à pouvoir tourner et à laquelle s'applique au moins un vérin hydraulique (60, 62).

*Fig. 2*

*Fig. 3*

Fig. 1a

Fig. 1b

Fig. 4